# EUROPEAN PATENT SPECIFICATION

(11) **EP 1 655 528 B1**
(45) Date of publication and mention of the grant of the patent: **02.04.2014**
(21) Application number: 05256725.2
(22) Date of filing: 28.10.2005
(51) Int. Cl.: F16L 21/035, F16L 21/03, F16L 25/14, E03D 11/16

(54) **WC pan connector**
Verbindungselement zwischen WC-Becken und dem Fallrohr.
Élément de liaison entre la cuvette des toilettes et le tuyau de descente.

(30) Priority: 30.10.2004 GB 0424109
(43) Date of publication of application: 10.05.2006
(73) Proprietor: McALPINE & COMPANY LIMITED, Hillington Glasgow G52 4LF Scotland (GB)
(72) Inventor: McAlpine, James Edward, Hillington G52 4LF (GB)
(74) Representative: Shanks, Andrew

(56) References cited:
- DE-A1- 19 503 769
- GB-A- 819 435
- GB-A- 1 316 132
- GB-A- 1 352 461
- GB-A- 1 531 449
- GB-A- 2 012 902
- GB-A- 2 134 611

## Description

### FIELD OF THE INVENTION

This invention relates to connectors for connecting a WC pan to a soil pipe, particularly to flexible WC pan connectors.

### BACKGROUND OF THE INVENTION

Forming and maintaining a tight seal between the pan of a WC and a soil pipe is crucial. If this seal leaks due to poor design or installation then waste products can leak from the WC into the surrounding environment.

A wide range of connectors are available. One of the more popular types is the flexible connector. Flexible connectors are popular because one size of flexible connector can "fit" a number of different sizes of pan outlet and soil pipe inlet.

Conventional flexible connectors have drawbacks, however; for example because of their flexible nature, the pan can be introduced into the connector without the WC outlet being exactly aligned with the connector, that is to say the toilet may be canted to one side and introduced gradually into the connector. Whilst the ability to introduce the pan gradually into the connector assists in installation, part of the sealing element, which forms the seal between the connector and the WC pan, can be pulled away from the connector wall, which may lead to leakage problems.

A further drawback of conventional flexible connectors has been the difficulty in forming a seal with soil pipe. Generally ribs are provided on the external surface of the connector between which sealing rings are placed. To obtain a tight seal a number of these rings are required adding to the cost of the finished product.

It is an object of embodiments of the present invention to provide a WC pan connector which overcomes at least one of the problems associated with the prior art.

German Patent Application No DE 195 03 769 discloses a seal for connecting two pipes, particularly of similar inner diameters. A soft annular flange with a step pulled on to a support ring is provided for insertion into a waste pipe at one end and for receiving a WC pan outlet at the other end.

United Kingdom Patent Application No GB 1316132 discloses a WC pan connector with a removeable sealing ring positioned between two internal fins.

United Kingdom Patent Application No GB 1352461 discloses a pipe coupling with a sealing ring and a locking ring with an annular rib or a split ring.

### SUMMARY OF THE INVENTION

The present invention is defined in attached claim 1.

The sealing element retaining member acts to retain the sealing element in a preferred configuration, even when the WC outlet and the connector inlet are misaligned as the WC outlet is inserted into the connector.

Preferably, the seal element retaining member is a resilient member. The resilient member may be biased to retain the sealing element in a preferred configuration.

The housing may be made from a polymeric material. Preferably, the housing is made from ethyl vinyl acetate (EVA). Polymeric materials, particularly EVA lend themselves to cost effective manufacturing techniques such as injection moulding.

The WC pan connector may be sufficiently flexible to be useable with a range of sizes of WC pan outlets and/or a range of sizes of soil pipe inlet. A connector which can be used with a range of WCs and soil pipes reduces the amount of stock suppliers need to hold.

Preferably, the split ring is made from a polymeric material. Alternatively, the split ring is made from spring steel. Indeed the split ring may be made from any suitable resilient material.

Most preferably, the resilient member is an acetal (polyoxymethylene) split ring. Acetal split rings are reliable and have relatively low manufacturing costs.

Preferably, the sealing element is a ring shaped seal. The seal may have a WC pan engaging portion and a housing engaging portion.

Preferably, the resilient member engages the housing engaging portion. The sealing element may have an "L" cross-section.

Preferably, the housing further includes a sealing element support extending from an internal wall of the housing.

Preferably, at least the pan engaging portion of the sealing element is sufficiently flexible to be useable with and form a seal against a range of sizes of WC pan outlets. The seal element may be an elastomeric seal element. An elastomeric seal will generally be ideal for forming a tight seal with any one of a range of sizes of WC pan outlets.

Preferably, there is a plurality of circumferential ribs extending from the external surface of the housing adjacent the outlet, adjacent ribs being spaced sufficiently apart from one another to receive a soil pipe seal.

The at least one rib may be deformable. Having deformable ribs means the WC pan connector is useable with a range of sizes of soil pipe inlet.

The WC pan connector may further include a soil pipe seal located between a pair of adjacent ribs. A soil pipe seal is provided to form a primary seal between the connector and the soil pipe inlet.

Preferably, the soil pipe seal is a circular seal. The soil pipe seal may be flexible. Most preferably, the soil pipe seal is an elastomeric ring seal. An elastomeric seal will generally be ideal for forming a tight seal with any one of a range of sizes of soil pipe inlets.

The soil pipe seal may have a portion which abuts one of the adjacent circumferential ribs. In this case, the soil pipe seal portion may abut the further of the two ribs from the connector outlet.

The portion of the soil pipe seal may have a diameter less than or equal to the adjacent ribs. Using a seal which has diameter less than or equal to the adjacent ribs permits a secondary seal to be formed between the ribs and the soil pipe.

Preferably, the circumference of the ribs is substantially constant or increases with distance from the connector outlet.

Preferably, there are two or three ribs. Alternatively, there are more than two or three ribs. Having, for example, six ribs increases the cost of manufacture but has the advantage of increasing the fitting length of the WC pan connector.

By virtue of the above a WC can be sealed to a soil pipe by a WC pan connector, which provides increased reliability of sealing.

### BRIEF DESCRIPTION OF THE DRAWINGS

The present invention will now be described, by way of example, with reference to the accompanying figures in which:
Figure 1 is a side view of a WC pan connector in accordance with a preferred embodiment of the present invention;
Figure 2 is a cross-sectional view of Figure 1;
Figure 3 is a plan view of the acetal split ring of Figure 2; and
Figure 4 is a cross-sectional view of Figure 1 with the WC pan connector connected to a WC and a soil pipe.

### DETAILED DESCRIPTION OF THE DRAWINGS

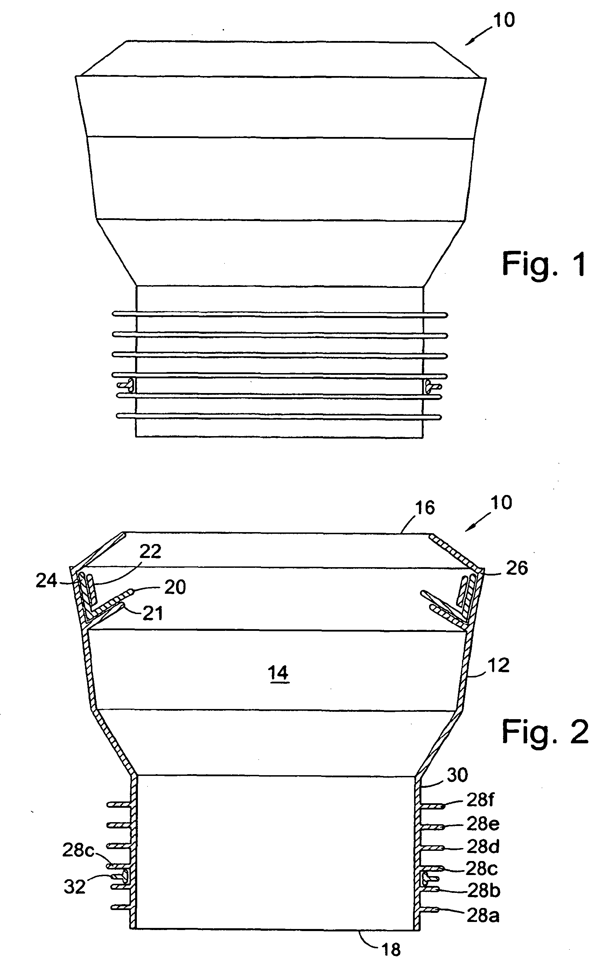

Referring firstly to Figure 1 there is shown a side view of a WC pan connector, generally indicated by reference numeral 10, in accordance with a preferred embodiment of the present invention. The WC connector 10 is intended to form a sealed connection between the outlet of the WC and the inlet of a soil pipe (not shown).

The structure of the WC pan connector 10 can be best seen in Figure 2 which is a cross sectional view of Figure 1. The WC pan connector 10 comprises an EVA housing 12 defining a throughbore 14 with an inlet 16 and an outlet 18. The inlet 16 is adapted to be connected to the outlet of a WC pan connector (not shown) and the outlet 18 is adapted to be connected to the inlet of a soil pipe (not shown). The pan connector 10 further includes an elastomeric ring seal 20 resting on sealing element support 21 for forming a seal between the housing 12 and the WC outlet (not shown). The pan connector further includes a ring seal retaining member 22 in the form of a resilient split ring of acetal which engages a portion 24 of the elastomeric ring seal 20 and is biased to retain the elastomeric ring seal 20 in a preferred configuration, in this case maintaining contact between the elastomeric ring seal 20 and the internal wall 26 of the housing 12.

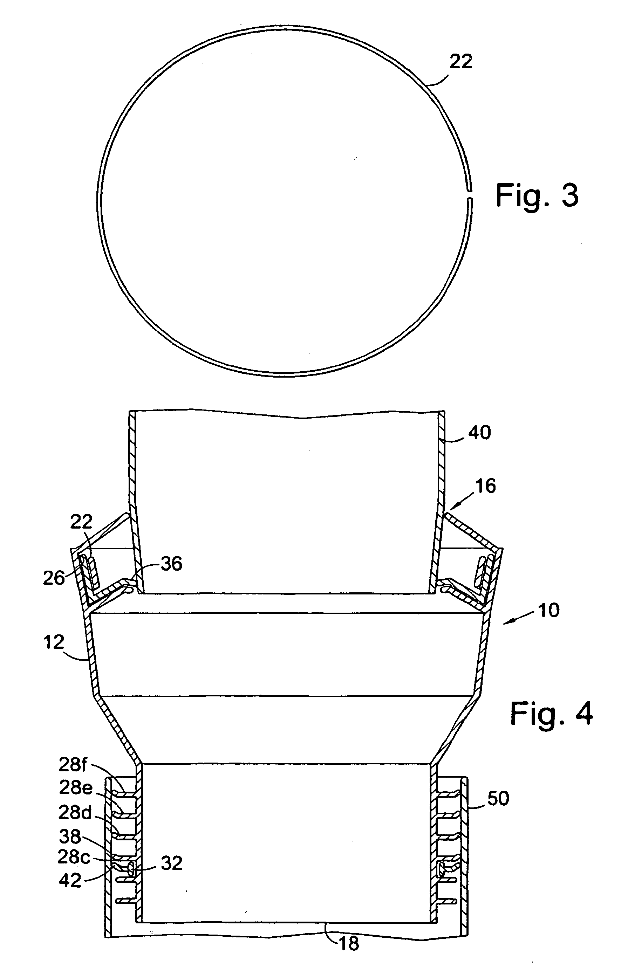

The resilient acetal split ring 22 can be seen in plan view in Figure 3.

Referring back to Figure 2 the connector outlet 18 is adapted to be connected to the inlet of a soil pipe (not shown) by means of six circumferential ribs 28a-f. The ribs 28a-f extend from the external surface 30 of the housing 12 adjacent the outlet 18. As can be seen from Figure 2 the circumference of the first and second ribs 28a,b is less than the circumference of the third, fourth, fifth and sixth ribs, 28c-f. The reduced circumference of the first and second ribs 28a,28b assists in guiding the housing outlet 18 into a soil pipe (not shown).

The WC pan connector 10 further includes an elastomeric soil pipe "T" seal 32 located between the second and third ribs 28b,28c. It will be noted from Figure 2 that the elastomeric soil pipe seal 32 is a ring seal and has a diameter substantially the same as that of the third circumferential rib 28c, the purpose of this feature will be discussed in connection with Figure 4.

Referring now to Figure 4, a cross sectional view of Figure 1 with the WC pan connector 10 connected to a WC outlet 40 and a soil pipe 50. As can be seen the WC outlet 40 has been pushed through the inlet 16 of the pan connector 10 and deformed the tip 36 of the elastomeric ring seal 20 to form a seal. The presence of the resilient acetal split ring 22 has, however, maintained contact between the portion 24 of the elastomeric ring seal 20 and the internal wall 26 of the housing 12.

As can also be seen from Figure 4, the third, fourth, fifth and sixth circumferential ribs 28c-f have all been deflected at their respective end points 38 as has the tip 42 of the elastomeric soil pipe seal 32. The primary seal between the connector housing 12 and the soil pipe 50 is made by the tip 42 of the elastomeric soil pipe seal 32, however, secondary seals are formed at the end points 38 of the third, fourth, fifth and sixth circumferential ribs 28c-f.

Various modifications and improvements may be made to the embodiments hereinbefore described without departing from the scope of the invention. For example, it will be understood that any suitable resilient member could be used, such as spring steel, or a compression spring formed into a ring. In a further alternative, the soil pipe seal could have an inverted "L" cross-section, one leg of "L" abutting the external surface 30 of the housing and the other leg of the "L" abutting a surface of an adjacent rib. It will also be understood that although there are six ribs shown in the figures, fewer ribs could be used, and the soil pipe seal could be located between, for example, the fourth and fifth ribs 28d,28e.

Those of skill in the art will also recognise that the above described embodiment of the invention provides a WC pan connector by which a WC can be sealed to a soil pipe, which provides increased reliability of sealing.

## Claims

1. A flexible WC pan connector (10) comprising:
a flexible housing (12) defining a throughbore (14), the housing having an inlet (16) adapted to be connected to an outlet from a WC, and an outlet (18) adapted to be connected to the inlet of a soil pipe;
a sealing element (20) entirely positioned within the housing (12) for forming a seal between the housing (12) and the WC outlet within the housing throughbore (14); and
a sealing element retaining member in the form of a split ring (22) entirely positioned within the housing (12) and adapted to engage a portion of the sealing element (20) and retain the sealing element (20) in a preferred configuration; the retaining member (22) biasing the sealing element (20) towards the internal wall of the housing.

2. The WC pan connector (10) of claim 1, wherein the seal element retaining member (22) is a resilient member.

3. The WC pan connector (10) of claim 2, wherein the resilient member (22) is biased to retain the sealing element (20) in a preferred configuration.

4. The WC pan connector (10) of any preceding claim, wherein the housing (12) is made from a polymeric material.

5. The WC pan connector (10) of any preceding claim, wherein the housing (12) is made from ethyl vinyl acetate.

6. The WC pan connector (10) of any preceding claim, wherein the split ring (22) is made from a polymeric material.

7. The WC pan connector (10) of any preceding claim, wherein the split ring (22) is made from spring steel.

8. The WC pan connector (10) of any preceding claim, wherein the resilient member (22) is an acetal (polyoxymethylene) split ring.

9. The WC pan connector (10) of any preceding claim, wherein the sealing element (20) is a ring shaped seal.

10. The WC pan connector (10) of any preceding claim, wherein the seal (20) has a WC pan engaging portion and a housing engaging portion (24).

11. The WC pan connector (10) of claim 10, wherein the resilient member (22) engages the housing engaging portion.

12. The WC pan connector (10) of any preceding claim, wherein the sealing element (20) has an "L" cross-section.

13. The WC pan connector of any preceding claim, wherein the housing (12) further includes a sealing element support (21) extending from an internal wall of the housing.

14. The WC pan connector (10) of any preceding claim, wherein the seal element (12) is an elastomeric seal element.

15. The WC pan connector of any preceding claim, wherein the WC pan connector outlet is adapted to be connected to the inlet of a soil pipe by at least one circumferential rib (28) extending from an external surface (30) of the housing adjacent the outlet.

16. The WC pan connector (10) of any preceding claim, wherein there is a plurality of circumferential ribs (28) extending from the external surface of the housing (12) adjacent the outlet, adjacent ribs (28) being spaced sufficiently apart from one another to receive a soil pipe seal(32).

17. The WC pan connector (10) of either of any preceding cairn, wherein the at least one rib (28) is deformable.

18. The WC pan connector (10) of any preceding claim, wherein the WC pan connector further includes a soil pipe seal (32) located between a pair of adjacent ribs (28).

19. The WC pan connector (10) of claim 18, wherein the soil pipe seal (32) is a circular seal.

20. The WC pan connector (10) of either of claims 18 or 19, wherein the soil pipe seal (32) is flexible.

21. The WC pan connector (10) of any of claims 18 to 20, wherein the soil pipe seal (32) is an elastomeric ring seal.

22. The WC pan connector (10) of any of claims 18 to 21, wherein the soil pipe seal(32) has a portion which abuts one of the adjacent circumferential ribs(28).

23. The WC pan connector (10) of claim 22, wherein the portion of the soil pipe seal (32) may have a diameter less than or equal to the adjacent ribs(28).

24. The WC pan connector (10) of claim 16, wherein the circumference of the ribs (28) is substantially constant or increases with distance from the connector outlet.

25. The WC pan connector (10) of either of claims 16 or 24, wherein there are two or three ribs (28).

## Patentansprüche

1. Flexibles WC-Becken-Verbindungselement (10), das aufweist:
ein flexibles Gehäuse (12), das eine Durchgangsbohrung (14) definiert, wobei das Gehäuse einen Eintritt (16), der so ausgebildet ist, dass er mit einem Austritt aus einem WC verbunden wird, und einen Austritt (18) aufweist, der so ausgebildet ist, dass er mit dem Eintritt eines Fäkalienfallrohres verbunden wird;
ein Dichtungselement (20), das vollständig innerhalb des Gehäuses (12) für das Ausbilden einer Dichtung zwischen dem Gehäuse (12) und dem WC-Austritt innerhalb der Gehäusedurchgangsbohrung (14) positioniert ist; und
ein Dichtungselementhalteteil in der Form eines Spaltringes (22), der vollständig innerhalb des Gehäuses (12) positioniert und ausgebildet ist, um mit einem Abschnitt des Dichtungselementes (20) in Eingriff zu kommen und das Dichtungselement (20) in einer bevorzugten Konfiguration zu halten; wobei das Halteteil (22) das Dichtungselement (20) in Richtung der Innenwand des Gehäuses vorspannt.

2. WC-Becken-Verbindungselement (10) nach Anspruch 1, bei dem das Dichtungselementhalteteil (22) ein elastisches Teil ist.

3. WC-Becken-Verbindungselement (10) nach Anspruch 2, bei dem das elastische Teil (22) vorgespannt wird, um das Dichtungselement (20) in einer bevorzugten Konfiguration zu halten.

4. WC-Becken-Verbindungselement (10) nach einem der vorhergehenden Ansprüche, bei dem das Gehäuse (12) aus einem polymeren Material besteht.

5. WC-Becken-Verbindungselement (10) nach einem der vorhergehenden Ansprüche, bei dem das Gehäuse (12) aus Ethylvinylacetat besteht.

6. WC-Becken-Verbindungselement (10) nach einem der vorhergehenden Ansprüche, bei dem der Spaltring (22) aus einem polymeren Material besteht.

7. WC-Becken-Verbindungselement (10) nach einem der vorhergehenden Ansprüche, bei dem der Spaltring (22) aus Federstahl besteht.

8. WC-Becken-Verbindungselement (10) nach einem der vorhergehenden Ansprüche, bei dem das elastische Teil (22) ein Acetal (Polyoxymethylen)-Spaltring ist.

9. WC-Becken-Verbindungselement (10) nach einem der vorhergehenden Ansprüche, bei dem das Dichtungselement (20) eine ringförmige Dichtung ist.

10. WC-Becken-Verbindungselement (10) nach einem der vorhergehenden Ansprüche, bei dem die Dichtung (20) einen WC-Becken-Eingriffsabschnitt und einen Gehäuseeingriffsabschnitt (24) aufweist.

11. WC-Becken-Verbindungselement (10) nach einem der vorhergehenden Ansprüche, bei dem das elastische Teil (22) mit dem Gehäuseeingriffsabschnitt in Eingriff kommt.

12. WC-Becken-Verbindungselement (10) nach einem der vorhergehenden Ansprüche, bei dem das Dichtungselement (20) einen "L"-Querschnitt aufweist.

13. WC-Becken-Verbindungselement (10) nach einem der vorhergehenden Ansprüche, bei dem das Gehäuse (12) außerdem eine Dichtungselementauflage (21) umfasst, die sich von einer Innenwand des Gehäuses aus erstreckt.

14. WC-Becken-Verbindungselement (10) nach einem der vorhergehenden Ansprüche, bei dem das Dichtungselement (12) ein elastomeres Dichtungselement ist.

15. WC-Becken-Verbindungselement (10) nach einem der vorhergehenden Ansprüche, bei dem der WC-Becken-Verbindungselementaustritt so ausgebildet ist, dass er mit dem Eintritt eines Fäkalienfallrohres durch mindestens eine Umfangsrippe (28) verbunden wird, die sich von einer Außenfläche (30) des Gehäuses benachbart dem Austritt erstreckt.

16. WC-Becken-Verbindungselement (10) nach einem der vorhergehenden Ansprüche, bei dem eine Vielzahl von Umfangsrippen (28) vorhanden ist, die sich von der Außenfläche des Gehäuses (12) benachbart dem Austritt erstrecken, wobei die benachbarten Rippen (28) ausreichend voneinander beabstandet sind, um eine Fäkalienfallrohrdichtung (32) aufzunehmen.

17. WC-Becken-Verbindungselement (10) nach einem der vorhergehenden Ansprüche, bei dem die mindestens eine Rippe (28) verformbar ist.

18. WC-Becken-Verbindungselement (10) nach einem der vorhergehenden Ansprüche, bei dem das WC-Becken-Verbindungselement außerdem eine Fäkalienfallrohrdichtung (32) umfasst, die zwischen einem Paar der benachbarten Rippen (28) angeordnet ist.

19. WC-Becken-Verbindungselement (10) nach Anspruch 18, bei dem die Fäkalienfallrohrdichtung (32) eine kreisförmige Dichtung ist.

20. WC-Becken-Verbindungselement (10) nach entweder Anspruch 18 oder 19, bei dem die Fäkalienfallrohrdichtung (32) flexibel ist.

21. WC-Becken-Verbindungselement (10) nach einem der Ansprüche 18 bis 20, bei dem die Fäkalienfallrohrdichtung (32) eine elastomere Ringdichtung ist.

22. WC-Becken-Verbindungselement (10) nach einem der Ansprüche 18 bis 21, bei dem die Fäkalienfallrohrdichtung (32) einen Abschnitt aufweist, der an eine der benachbarten Umfangsrippen (28) anstößt.

23. WC-Becken-Verbindungselement (10) nach Anspruch 22, bei dem der Abschnitt der Fäkalienfallrohrdichtung (32) einen Durchmesser kleiner als oder gleich dem der benachbarten Rippen (28) aufweisen kann.

24. WC-Becken-Verbindungselement (10) nach Anspruch 16, bei dem der Umfang der Rippen (28) im Wesentlichen konstant ist oder mit dem Abstand vom Verbindungselementaustritt größer wird.

25. WC-Becken-Verbindungselement (10) nach entweder Anspruch 16 oder 24, bei dem zwei oder drei Rippen (28) vorhanden sind.

## Revendications

1. Raccord flexible pour cuvette de WC (10), comprenant :
un boîtier flexible (12), définissant un alésage de passage (14), le boîtier comportant une entrée (16) adaptée pour être raccordée à une sortie du WC, et une sortie (18) adaptée pour être raccordée à l'entrée d'un tuyau de descente ;
un élément d'étanchéité (20) positionné entièrement dans le boîtier (12) pour former un joint d'étanchéité entre le boîtier (12) et la sortie du WC dans l'alésage de passage du boîtier (14) ; et
un élément de retenue de l'élément d'étanchéité sous forme d'une bague fendue (22), positionné entièrement dans le boîtier (12), et adapté pour s'engager dans une partie de l'élément d'étanchéité (20) et pour retenir l'élément d'étanchéité (20) dans une configuration préférée ; l'élément de retenue (22) poussant l'élément d'étanchéité (20) vers la paroi interne du boîtier.

2. Raccord pour cuvette de WC (10) selon la revendication 1, dans lequel l'élément de retenue de l'élément d'étanchéité (22) est un élément élastique.

3. Raccord pour cuvette de WC (10) selon la revendication 2, dans lequel l'élément élastique (22) est sollicité pour retenir l'élément d'étanchéité (20) dans une configuration préférée.

4. Raccord pour cuvette de WC (10) selon l'une quelconque des revendications précédentes, dans lequel le boîtier (12) est composé d'un matériau polymère.

5. Raccord pour cuvette de WC (10) selon l'une quelconque des revendications précédentes, dans lequel le boîtier (12) est composé d'acétate de vinyle-éthyle.

6. Raccord pour cuvette de WC (10) selon l'une quelconque des revendications précédentes, dans lequel la bague fendue (22) est composée d'un matériau polymère.

7. Raccord pour cuvette de WC (10) selon l'une quelconque des revendications précédentes, dans lequel la bague fendue (22) est composée d'acier à ressorts.

8. Raccord pour cuvette de WC (10) selon l'une quelconque des revendications précédentes, dans lequel l'élément élastique (22) est une bague fendue d'acétal (polyoxyméthylène).

9. Raccord pour cuvette de WC (10) selon l'une quelconque des revendications précédentes, dans lequel l'élément d'étanchéité (20) est un élément d'étanchéité de forme annulaire.

10. Raccord pour cuvette de WC (10) selon l'une quelconque des revendications précédentes, dans lequel le joint d'étanchéité (20) comporte une partie d'engagement de la cuvette de WC et une partie d'engagement du boîtier (24).

11. Raccord pour cuvette de WC (10) selon la revendication 10, dans lequel l'élément élastique (22) s'engage dans la partie d'engagement du boîtier.

12. Raccord pour cuvette de WC (10) selon l'une quelconque des revendications précédentes, dans lequel l'élément d'étanchéité (20) a une section transversale en « L ».

13. Raccord pour cuvette de WC selon l'une quelconque des revendications précédentes, dans lequel le boîtier (12) englobe en outre un support de l'élément d'étanchéité (21), s'étendant à partir d'une paroi interne du boîtier.

14. Raccord pour cuvette de WC (10) selon l'une quelconque des revendications précédentes, dans lequel l'élément d'étanchéité (20) est un élément d'étanchéité élastomère.

15. Raccord pour cuvette de WC (10) selon l'une quelconque des revendications précédentes, dans lequel la sortie du raccord de la cuvette de WC est adaptée pour être connectée à l'entrée d'un tuyau de descente par au moins une nervure circonférentielle (28), s'étendant à partir d'une surface externe (30) du boîtier adjacente à la sortie.

16. Raccord pour cuvette de WC (10) selon l'une quelconque des revendications précédentes, comportant plusieurs nervures circonférentielles (28), s'étendant à partir de la surface externe du boîtier (12) adjacente à la sortie, les nervures adjacentes (28) étant espacées de manière suffisante l'une de l'autre pour recevoir un joint d'étanchéité du tuyau de descente (32).

17. Raccord pour cuvette de WC (10) selon l'une quelconque des revendications précédentes, dans lequel la au moins une nervure (28) est déformable.

18. Raccord pour cuvette de WC (10) selon l'une quelconque des revendications précédentes, dans lequel le raccord de la cuvette de WC englobe en outre un joint d'étanchéité du tuyau de descente (32) agencé entre une paire de nervures adjacentes (28).

19. Raccord pour cuvette de WC (10) selon la revendication 18, dans lequel le joint d'étanchéité du tuyau de descente (32) est un joint d'étanchéité circulaire.

20. Raccord pour cuvette de WC (10) selon les revendications 18 ou 19, dans lequel le joint d'étanchéité du tuyau de descente (32) est flexible.

21. Raccord pour cuvette de WC (10) selon l'une quelconque des revendications 18 à à 20, dans lequel le joint d'étanchéité du tuyau de descente (32) est un joint d'étanchéité élastomère de forme annulaire.

22. Raccord pour cuvette de WC (10) selon l'une quelconque des revendications 18 à à 21, dans lequel le joint d'étanchéité du tuyau de descente (32) comporte une partie butant contre l'une des nervures circonférentielles adjacentes (28).

23. Raccord pour cuvette de WC (10) selon la revendication 22, dans lequel la partie du joint d'étanchéité du tuyau de descente (32) peut avoir un diamètre inférieur ou égal à celui des nervures adjacentes (28).

24. Raccord pour cuvette de WC (10) selon la revendication 16, dans lequel la circonférence des nervures (28) est pratiquement constante ou est accrue en fonction de la distance par rapport à la sortie du raccord.

25. Raccord pour cuvette de WC (10) selon les revendications 16 ou 24, comportant deux ou trois nervures (28).
